(19) Europäisches Patentamt

European Patent Office

Office européen des brevets

(11) **EP 1 413 066 B1**

(12) **FASCICULE DE BREVET EUROPEEN**

(45) Date de publication et mention
de la délivrance du brevet:
**20.09.2006 Bulletin 2006/38**

(21) Numéro de dépôt: **02760384.4**

(22) Date de dépôt: **08.07.2002**

(51) Int Cl.:
*H04B 1/707* (2006.01)    *H04J 13/04* (2006.01)

(86) Numéro de dépôt international:
**PCT/FR2002/002386**

(87) Numéro de publication internationale:
**WO 2003/013016 (13.02.2003 Gazette 2003/07)**

(54) **DISPOSITIF DE DETECTION CONJOINTE DE CODES CDMA POUR LIAISON DESCENDANTE A TRAJETS MULTIPLES**

EINRICHTUNG ZUR GLEICHZEITIGEN DETEKTION VON CDMA CODES FÜR EINE MEHRWEGE-ABSATZSTRECKE

DEVICE FOR JOINT DETECTION OF CDMA CODES FOR MULTIPATH DOWNLINK

(84) Etats contractants désignés:
**AT BE BG CH CY CZ DE DK EE ES FI FR GB GR IE IT LI LU MC NL PT SE SK TR**

(30) Priorité: **30.07.2001 FR 0110293**

(43) Date de publication de la demande:
**28.04.2004 Bulletin 2004/18**

(73) Titulaire: **FRANCE TELECOM
75015 Paris (FR)**

(72) Inventeurs:
• **ROS, Laurent**
**F-38420 Meylan (FR)**
• **JOURDAIN, Geneviève**
**F-38570 Tencin (FR)**
• **ARNDT, Marylin**
**F-38330 Biviers (FR)**

(74) Mandataire: **Lapoux, Roland**
**Cabinet Martinet & Lapoux,
43 Boulevard Vauban,
B.P. 405,
Guyancourt
78055 Saint Quentin Yvelines Cedex (FR)**

(56) Documents cités:
• **HUANG H C ET AL: "LINEAR DIFFERENTIALLY COHERENT MULTIUSER DETECTION FOR MULTIPATH CHANNELS" WIRELESS PERSONAL COMMUNICATIONS, KLUWER ACADEMIC PUBLISHERS, NL, vol. 6, no. 1/2, 1998, pages 113-136, XP000734803 ISSN: 0929-6212**
• **FAWER U ET AL: "A MULTIUSER RECEIVER FOR CODE DIVISION MULTIPLE ACCESS COMMUNICATIONS OVER MULTIPATH CHANNELS" IEEE TRANSACTIONS ON COMMUNICATIONS, IEEE INC. NEW YORK, US, vol. 43, no. 2/4, PART 3, 1 février 1995 (1995-02-01), pages 1556-1565, XP000505642 ISSN: 0090-6778**
• **HUANG H ET AL: "COMBINED PILOT MULTIPATH NOISE CANCELLATION AND PARTIAL DECORRELATION FOR COHERENT MULTICODE CDMA RECEIVERS" IEEE GLOBAL TELECOMMUNICATIONS CONFERENCE. PHOENIX, ARIZONA, NOV. 3 - 8, 1997, GLOBAL TELECOMMUNICATIONS CONFERENCE (GLOBECOM), NEW YORK, IEEE, US, vol. 2, 3 novembre 1997 (1997-11-03), pages 904-909, XP000737663 ISBN: 0-7803-4199-6**

**Description**

La présente invention concerne des transmissions numériques à accès multiple à répartition par codes CDMA (Coded Division Multiple Access) dans un système cellulaire radiotéléphonique.

Plus particulièrement, l'invention concerne un dispositif numérique de détection des symboles, luttant contre l'interférence intersymbole, et d'accès multiples dans le récepteur d'un terminal radiotéléphonique mobile de type UMTS (Universal Mobile Telecommunications System) en mode TDD (Time Division Duplex), suivant la liaison descendante depuis une station de base vers le terminal mobile.

Avant de commenter des dispositifs de détection conjointe de codes CDMA pour une liaison descendante de type UMTS, quelques caractéristiques d'une transmission UMTS en mode TDD sont rappelées ci-après.

Une trame à division du temps TDMA (Time Division Multiple Access) d'un canal physique de propagation a une durée de 10 ms et comporte 15 intervalles temporels (timeslots en terminologie anglo-saxonne). Dans chaque intervalle temporel sont transmis jusqu'à K=16 salves simultanées de données (bursts en terminologie anglo-saxonne), le plus souvent respectivement assignés à K usagers, bien que deux salves ou plus peuvent être attribuées à un même usager. Le code CDMA $c_k$ pour une salve et un usager donné, désigné par l'indice entier k tel que $1 \leq k \leq K$, est défini par une séquence ( channelisation code en terminologie anglo-saxonne) de Q éléments de code (chips en terminologie anglo-saxonne), associés à un sur-échantillonnage de chaque symbole de période $T_s$. Le nombre Q d'éléments de code est appelé le facteur d'étalement et est égal à 16. En mode CDMA, le nombre de codes actifs K est inférieur ou égal à Q. Un intervalle temporel peut contenir 2560 éléments de code (chips) de période $T_c = T_s/Q$.

En pratique, chaque intervalle temporel est décomposé en deux champs de données de longueur identique encadrant une séquence d'apprentissage médiane (midamble en terminologie anglo-saxonne) de 256 ou 512 éléments de code pour estimer le canal de propagation. Les symboles sont estimés séquentiellement par filtrage avec une profondeur globale de détecteur, ou de mémoire prédéterminée, de $P_d$ symboles. Ainsi un symbole de données dans un intervalle de temps est estimé en fonction du résultat du traitement linéaire d'une portion d'échantillons correspondant à une durée de $P_d.T_s$ inférieure à la durée d'un intervalle de temps.

En outre, à l'émission dans la station de base, chaque élément de code peut être sur-échantillonné d'un facteur de sur-échantillonnage S au moins égal à 2. Ainsi pour un symbole de données, QS échantillons de période d'échantillonnage $T_s/SQ$ correspondant à Q éléments de code sont émis après une modulation de phase à quatre états.

Par ailleurs, bien qu'en pratique le récepteur du terminal mobile peut comprendre plus qu'une antenne, il est supposé ci-après que les blocs-diagrammes des dispositifs de détection connus et selon l'invention, y compris ceux illustrés, ne se rapportent qu'à une seule antenne.

Dans une cellule du système cellulaire radiotéléphonique, contrairement à la liaison montante, la liaison descendante est synchrone puisque les signaux des différents terminaux d'usager couverts par la cellule sont synchronisés à l'émission par la station de base. Dans le cas d'une station de base courante, les signaux des différents usagers sont toujours synchronisés à l'entrée du récepteur du terminal mobile après avoir traversé le même canal de propagation. Dans l'environnement du terminal radio mobile considéré, la propagation s'effectue par plusieurs trajets de propagation, typiquement $L_t$ = 2 à 6 trajets prépondérants.

La détection conjointe de K codes CDMA $c_1$ à $c_K$ dans le terminal mobile d'un usager donné vise à estimer les symboles portant le code attribué temporairement à l'usager donné, que l'on supposera être le code n° $k_u$, en utilisant la connaissance des K-1 codes des autres usagers qui interfèrent entre eux. Un dispositif de détection conjointe annule en général partiellement l'interférence englobant l'interférence d'accès multiple entre les codes et l'interférence entre les symboles. En présence de bruit additif à l'entrée du récepteur du terminal, on a intérêt à ne pas annuler complètement l'interférence selon un critère de forçage à zéro mais à minimiser globalement l'effet du bruit et de l'interférence avec un critère d'erreur quadratique moyenne minimum MMSE (Minimum Mean Square Error). Néanmoins lorsque le bruit additif est négligeable par rapport au signal utile, il est souhaitable que le résidu d'interférence soit très faible. Pour une structure de dispositif de détection conjointe donnée, on s'intéresse alors à l'aptitude théorique de cette structure à annuler exactement l'interférence en l'absence de bruit additif. Cette propriété n'est pas bien souvent atteinte par les structures pratiques connues.

Dans la technique antérieure de la détection conjointe, deux structures de dispositif de détection conjointe appelées $T_c$-structure et $T_s$-structure travaillent symbole par symbole.

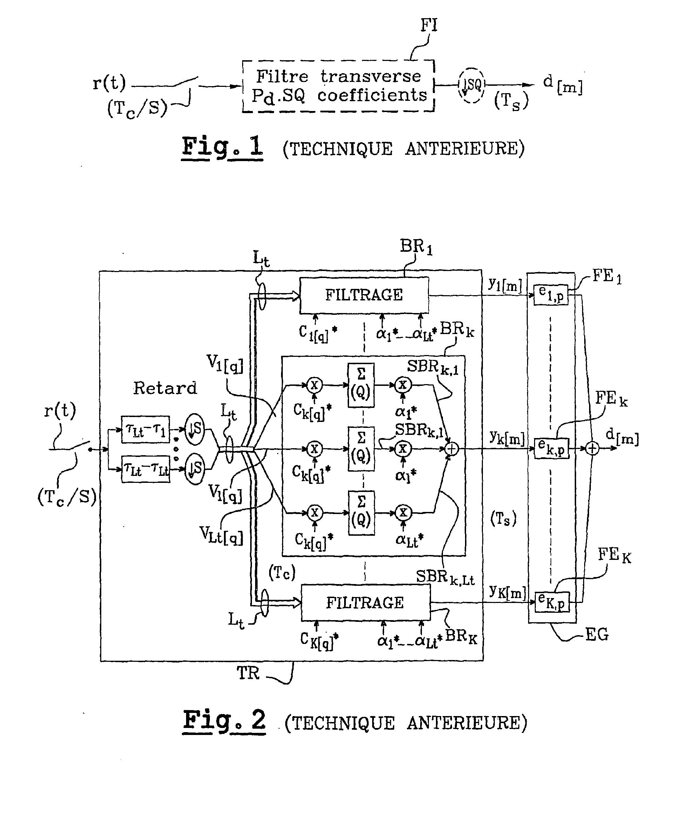

S'agissant de la $T_c$-structure représentée à la figure 1, cette structure comprend un filtre transverse fractionné FI opérant en entrée à la cadence $T_c/S$ sur le signal r(t) reçu en bande de base et préalablement filtré analogiquement, S étant le facteur de sur-échantillonnage égal typiquement à 1, 2 ou 4, et en sortie à la cadence $T_s$ des estimés des symboles. En contexte de trajets multiples, la $T_c$-structure est divulguée notamment dans la demande de brevet FR-A-2793363 et est nommée "Egaliseur en ligne" (Row-equalizer). Une fois les coefficients du filtre transverse FI calculés à partir de paramètres du canal, chaque symbole est estimé séquentiellement par un produit scalaire entre la portion d'échantillons reçue correspondante et un jeu de $SQP_d$ coefficients du filtre.

La $T_c$-structure peut être qualifiée de libre, car pour un pas d'échantillonnage $T_s/SQ$ choisi en entrée, elle réalise le traitement linéaire, non récursif, sans imposer de structure spécifique contrairement à la $T_s$-structure. Une caractéristique essentielle de ce dispositif de détection est qu'il est capable d'annuler exactement l'interférence pour une longueur déterminée

$$P_d \geq \frac{KW_s}{(SQ - K)}$$

où $W_s$ désigne le nombre entier de symboles nécessaire pour couvrir la longueur de la réponse impulsionnelle du canal de propagation entre la station de base et le terminal, appelée ci-après durée de canal, exprimée en période de symbole. En effet, on peut vérifier que l'annulation exacte nécessite de résoudre un système de $K(W_s + P_d)$ équations linéaires avec $SQP_d$ "inconnues" que sont les coefficients du filtre FI et qui peuvent donc être correctement choisis au sens des moindres carrés par exemple, puisque le système admet des solutions, c'est-à-dire est sous-déterminé.

La $T_s$-structure représentée à la figure 2 comprend deux parties : une tête de réception à large bande TR recevant le signal reçu r(t) diversement retardé par des trajets multiples et un égaliseur EG au temps symbole $T_s$, qui sont dérivées de la structure théorique linéaire rappelée dans le livre " MULTIUSER DETECTION " de Sergio VERDU, Cambridge University Press, 1998, pages 243-246.

La tête de réception TR contient K branches de filtrage parallèles $BR_1$ à $BR_K$ respectivement associées aux codes $c_{1[q]}$ à $c_{K[q]}$ et délivrant des signaux discrets $y_{1[m]}$ à $y_{K[m]}$ au temps symbole $mT_s$ aux K entrées de l'égaliseur. Chaque branche $BR_k$ comporte un filtre adapté au code $c_{k[q]}$ et au canal de propagation et un sous-échantillonneur synchrone au temps symbole $T_s = Q.T_c$. Pratiquement, avec un canal à trajets multiples, le signal discret $y_{k[q]}$ produit par la branche $BR_k$ détaillée à la figure 2 résulte de la sommation des sorties au temps symbole de $L_t$ sous-branches $SBR_{k,1}$ à $SBR_{k,Lt}$ associées respectivement aux $L_t$ trajets de propagation. La sous-branche $SBR_{k,\ell}$ de la branche $BR_k$, avec $1 \leq \ell \leq L_t$, corrèle le signal reçu r(t) retardé de $\tau_{Lt} - \tau\ell$ au code $c_{k[q]}$. La sortie de la sous-branche $SBR_{k,\ell}$ est pondérée par le signal complexe estimé $\alpha_\ell^*$ du trajet "$\ell$". Ainsi la branche de filtrage adapté $BR_k$ recombine les trajets, en combinant directement les résultats des corrélations respectivement associées aux multiples trajets.

En contexte mono-usager (K=1), la structure particulière de tête de réception TR est dénommée "Rake", pour rappeler la forme en "râteau" du filtre adapté au canal formé de trajets discrets. La profondeur de la tête de réception TR est de $W_s+1$ symboles, soit $W_s$ symboles pour le filtre adapté au canal de propagation et 1 symbole pour le filtre adapté au code respectif dans chacune des branches parallèles. Les K échantillons $y_{1[m]}$ à $y_{K[m]}$ au temps symbole restitués par la tête de réception TR sont appliqués respectivement à K filtres transverses $FE_1$ à $FE_K$ dans l'égaliseur EG. Chaque filtre transverse $FE_k$ avec $1 \leq k \leq K$ a P coefficients $e_{k,1}, \dots e_{k,p}, \dots e_{k,P}$ et opère au temps symbole. La profondeur globale du dispositif de détection exprimée en symboles est ainsi de $P_d = P + W_s$.

Un autre exemple d'un tel dispositif est montré dans le document HUANG H. et al., "Combined Pilot Multipath Noise Cancellation and Partial Decorrelation for coherent Multicode CDMA Receivers"

Les inconvénients de la $T_c$-structure par rapport à la $T_s$-structure sont essentiellement au nombre de trois.

Le premier inconvénient provient du fait que la $T_c$-structure effectue tous les traitements sur les échantillons qui sont à la cadence la plus rapide $T_c/S$ au lieu d'effectuer une partie des traitements à la période de symbole $T_s$ sur des échantillons obtenus après corrélation avec les codes. Ainsi, la $T_c$-structure n'exploite pas la nature à trajets discrets du canal de propagation ni les propriétés de corrélation des signaux CDMA et a un très grand nombre de coefficients $P_d SQ \geq W_s.SQ$ si l'on veut que la réponse impulsionnelle du filtre transverse FI couvre la durée du canal, ce qui est souhaitable en présence de bruit. Comparativement à la tête de réception TR de la $T_s$-structure, celle-ci est moins complexe à cause du nombre de multiplications par seconde beaucoup plus faible, dépendant du nombre de trajets $L_t$ et non de la durée de canal $W_s$, soit en tout une multiplication complexe par trajet et par code à chaque période de symbole $T_s$.

Le deuxième inconvénient est relatif au calcul des coefficients beaucoup plus complexe que celui dans la $T_s$-structure car ce calcul nécessite une description du système au temps de sous-élément de code $T_c/S$ au lieu d'au temps symbole $T_s$. La détermination des coefficients dépend de la formation et de la pseudo-inversion d'une matrice de corrélation de grande taille $[(P_d.SQ) \times (P_d SQ)]$ au lieu de $[KP \times KP]$.

Le troisième inconvénient a trait à la transmission multi-code, c'est-à-dire plusieurs des K codes actifs sont associés au même terminal radiotéléphonique mobile. La $T_c$-structure doit être dupliquée autant de fois qu'il y a de codes associés à décoder, alors que la tête de réception TR dans la $T_s$-structure est conservée et seul le traitement au temps symbole doit être multiplié à raison d'un égaliseur par code associé.

L'avancée en terme de complexité de la $T_s$-structure par rapport à la $T_c$-structure a été présentée ci-dessus. L'atout de la $T_s$-structure est principalement dû au fait que le banc de filtres adaptés complets dans les branches $BR_1$ à $BR_K$ a complètement compacté l'information. En effet, les échantillons $y_{1[m]}$ à $y_{K[m]}$ obtenus au temps symbole $T_s$

constituent un résumé exhaustif des échantillons reçus pour estimer les symboles émis.

La $T_s$-structure présente cependant un inconvénient majeur. Pour une annulation complète de l'interférence, elle nécessite théoriquement des branches de filtrage à mémoire infinie, nécessitant un traitement de tous les échantillons reçus pour décider un symbole au temps symbole $T_s$. En effet, il n'y a pas de solution exacte à durée finie, garantissant l'annulation d'interférence, pour l'estimation des coefficients qui est fondée sur un système sur-déterminé de $K(2W_s+P)$ équations linéaires avec seulement $KP$ paramètres inconnus que sont les coefficients. Le nombre $2W_s+P$ résulte, pour un code donné, du transfert global de l'émetteur au récepteur jusqu'à la variable d'estimation $d_{[m]}$ au travers de la mise en forme d'émission, du canal de propagation, du filtrage adapté en réception et de l'égaliseur de profondeur P.

En pratique, l'interférence devient négligeable pour une profondeur P de l'égaliseur EG deux ou trois fois supérieure à la durée de canal $W_s$ et la $T_s$-structure demeure attractive. Néanmoins, rien n'est garanti théoriquement et on ne peut pas anticiper la profondeur nécessaire qui dépend des caractéristiques du canal et du nombre de codes actifs.

Le but de l'invention est de fournir une structure de dispositif de détection conjointe, dépendant de la connaissance ou estimation des paramètres des trajets de propagation, qui préserve les deux caractéristiques d'intérêt pratique qui s'excluaient mutuellement dans la $T_c$-structure et la $T_s$-structure selon la technique antérieure.

A cette fin, un dispositif de détection conjointe pour un signal reçu supportant des symboles codés chacun conjointement par K codes et échantillonnés à au plus une période d'éléments de code et ayant traversé un canal de propagation à $L_t$ trajets multiples, comprenant $L_t$ moyens de retard pour retarder des échantillons du signal reçu avec des retards estimés dûs aux trajets, K moyens de filtrage pour corréler des suites d'échantillons reçus retardés chacun à un code respectif et à des coefficients de trajets estimés, et des moyens d'égalisation pour des échantillons à la période de symbole délivrées par les moyens de filtrage, est caractérisé en ce qu'il présente deux voies parallèles groupant chacune $L_t/2$ moyens de retard respectifs, K moyens de filtrage pour corréler $L_t/2$ suites d'échantillons retardés par les $L_t/2$ moyens de retard respectifs chacun à un code respectif et à $L_t/2$ coefficients de trajet estimés respectifs afin de sommer $L_t/2$ signaux ainsi corrélés et délivrés à la période de symbole, et K moyens d'égalisation pour respectivement égaliser linéairement les K signaux corrélés en dépendance d'un code associé, et comprend un moyen pour sommer 2K signaux égalisés à la période de symbole délivrés conjointement par les 2K moyens d'égalisation dans les deux voies.

Grâce aux caractéristiques précédentes, le dispositif de détection selon l'invention offre des avantages des deux structures connues précitées qui sont :

annulation exacte de l'interférence possible pour une profondeur finie P des moyens d'égalisation au temps symbole telle que $P \geq 2W_s$ ; cependant, le nombre $K(2W_s+P)$ d'équations linéaires à résoudre qui dépend de la durée du canal $W_s$ et du nombre K de codes et de la profondeur P des moyens d'égalisation, peut être tel que $P < 2W_s$ selon le choix possible des coefficients de chaque moyen d'égalisation, ce qui confère une solution inexacte à l'annulation d'interférence mais moins complexe que celle de la $T_c$-structure ; contrairement à la $T_s$-structure, les moyens de filtrage conservent suffisamment de degrés de liberté pour que l'annulation exacte d'interférence soit possible avec des moyens d'égalisation au temps symbole à durée finie ; et

traitements en deux étapes, l'une basée sur des corrélations avec les codes actifs et les trajets multiples dans les moyens de filtrage, l'autre sur une égalisation effectuée au temps symbole dans les moyens d'égalisation à filtres transverses ce qui était acquis avec la $T_s$-structure ; ces deux étapes bien menées garantissent une complexité raisonnable.

De plus, la corrélation avec les codes constitue une première étape naturelle et satisfaisante en mode CDMA, car elle permet de faire ressortir les attributs du signal reçu avant tout traitement ultérieur.

Dans la structure du dispositif de détection conjointe selon l'invention, le filtre adapté au canal (recombinaison des différents trajets) n'est pas réalisé classiquement en tête de réception large-bande, comme dans la Ts-structure, mais n'est accompli qu'indirectement par l'intermédiaire des deux ensembles à K moyens d'égalisation chacun.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1 est un bloc-diagramme fonctionnel d'un dispositif de détection conjointe à $T_c$-structure selon la technique antérieure, déjà commenté ;
- la figure 2 est un bloc-diagramme fonctionnel d'un dispositif de détection conjointe à $T_s$-structure selon la technique antérieure, déjà commenté ; et
- la figure 3 est un bloc-diagramme fonctionnel d'un dispositif de détection conjointe selon l'invention.

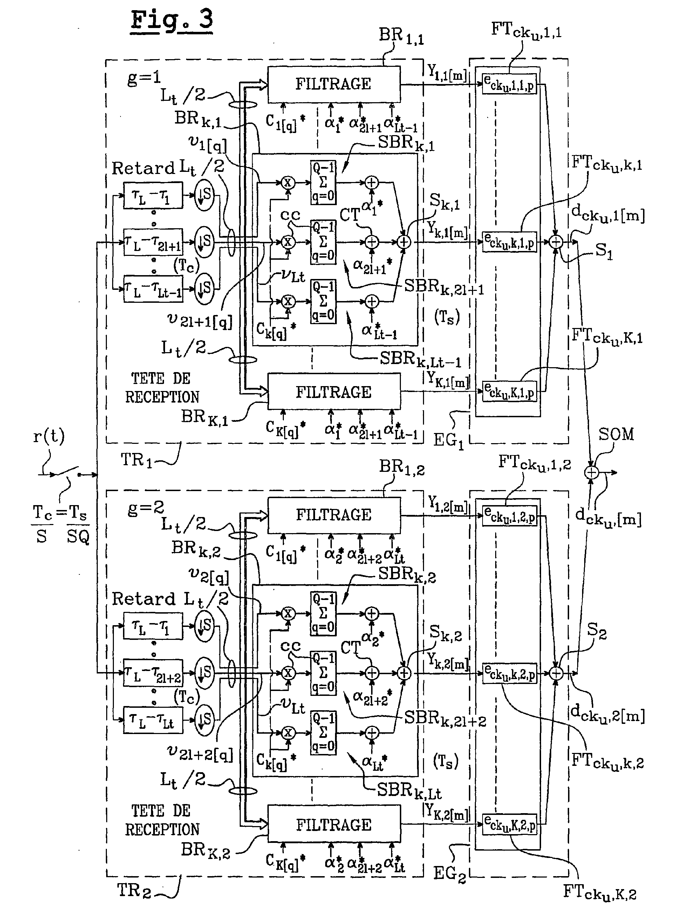

Selon la réalisation préférée montrée à la figure 3, un dispositif de détection conjointe de codes CDMA selon l'invention inclus dans le récepteur d'un terminal radiotéléphonique mobile de type UMTS offre une structure à deux voies parallèles comprenant essentiellement chacune une tête de réception à large bande $TR_1$, $TR_2$ constituée de K branches parallèles et un égaliseur $EG_1$, $EG_2$ au temps symbole $T_s$ constitué de K filtres transverses discrets parallèles à P coefficients chacun. Chaque voie $TR_1$-$EG_1$, $TR_2$-$EG_2$ reçoit un signal r(t) à la cadence $T_c/S = T_s/SQ$ et ne le retarde que relativement à l'une respective des moitiés de l'ensemble des trajets multiples.

Le signal reçu r(t) échantillonné à la cadence de $T_s/SQ$ est composé d'éléments binaires complexes en bande de base correspondant aux quatre états de phase $\{$ 1, j, -1, -j $\}$ ou $\{$ 1+j, -1+j, -1-j, 1-j $\}$ selon les voies traditionnelles I et Q de la modulation de phase QPSK (Quadrature Phase Shift Keying) à laquelle le signal émis par la station de base a été soumis. Par défaut tous les signaux et opérations considérés ci-après sont complexes, les décisions sur les symboles complexes filtrés et égalisés par le dispositif de l'invention s'effectuant ultérieurement.

On suppose dans le dispositif de détection conjointe selon l'invention que la tâche d'estimation du canal de propagation entre l'émetteur d'une station de base et le récepteur a été préalablement réalisée, c'est-à-dire que les paramètres tels que retards, amplitudes et phases des signaux dûs aux trajets multiples ont été préalablement identifiés. L'estimation de canal peut être préalablement réalisée classiquement à l'aide de séquences d'apprentissage (midambules) insérées au milieu des intervalles temporels (timeslots).

Afin d'assurer un bon équilibre en terme d'amplitude moyenne et de retard moyen entre les trajets en nombre pair $L_t$ partagés entre les deux voies, les $L_t$ retards estimés $\tau_1$ à $\tau_{Lt}$ dus aux trajets multiples, exprimés en nombre entier de sous-éléments de code à la cadence $T_s/SQ$, sont ordonnés de manière croissante et répartis de manière chronologique dans les deux voies, un trajet sur deux dans chaque voie :

la première voie $TR_1$-$EG_1$ contient $L_t/2$ lignes de retard parallèles respectivement imposant des retards estimés de $\tau_L$-$\tau_1$,... $\tau_L$-$\tau_{2\ell+1}$,... $\tau_L$-$\tau_{Lt-1}$ avec $0 \leq \ell \leq (L_t/2)$-1, où $\tau_L$ exprime en nombre de sous-éléments de code, le retard maximal (dernier trajet), arrondi au symbole supérieur :

$$\tau_L = W_s.S.Q \geq \tau_{Lt},$$

et fournissant un groupe "g" = 1 de suites d'échantillons reçus retardés d'indices impairs $\nu_{1[q]}$, ... $\nu_{2\ell+1[q]}$, ... $\nu_{Lt-1[q]}$ ; la deuxième voie $TR_2$-$EG_2$ contient $L_t/2$ lignes de retard parallèles respectivement imposant des retards estimés de $\tau_L$-$\tau_2$,... $\tau_L$-$\tau_{2\ell+2}$,... $\tau_L$-$\tau_{Lt}$ avec $0 \leq \ell \leq (L_t/2)$-1, et fournissant un groupe "g" = 2 de suites d'échantillons reçus retardés d'indices pairs $\nu_{2[q]}$, ... $\nu_{2\ell+2[q]}$, ... $\nu_{Lt[q]}$.

Les têtes de réception à large bande $TR_1$ et $TR_2$ et les égaliseurs $EG_1$ et $EG_2$ ayant des structures respectivement identiques, l'une $TR_g$-$EG_g$ des voies est décrite ci-après, quelle que soit la valeur de l'indice g, 1 ou 2.

Les suites d'échantillons reçus retardés $\{v_{2\ell+g[q]}\}$ à l'entrée de la tête de réception $TR_g$ sont appliquées à $L_t/2$ sous-échantillonneurs respectifs de rapport S afin que les échantillons reçus retardés passent à la cadence d'élément de code (chips) $T_c$. Les suites d'échantillons reçus retardés à la cadence $T_c$ sont appliquées conjointement à des premières entrées de $L_t/2$ corrélateurs dans chacune de K branches de filtrage adapté parallèles $BR_{1,g}$ à $BR_{K,g}$ qui sont respectivement associées aux codes $c_{1[q]}$ à $c_{K[q]}$ et qui délivrent respectivement des signaux discrets $Y_{1,g[m]}$ à $Y_{K,g[m]}$ à K entrées de l'égaliseur respectif $EG_g$, à chaque période de symbole $T_s$ indicée par l'indice entier "m" pour repérer les instants "$mT_s$".

Ainsi, la tête de réception $TR_1$-$TR_2$ ne recombine pas les $L_t$ trajets en un seul groupe, mais recombine les $L_t$ trajets en deux groupes chacun à K branches, à raison de 2 branches par code actif $c_{k[q]}$.

La branche élémentaire $BR_{k,g}$ détaillée à la figure 3 comporte en cascade dans chacune de $L_t/2$ sous-branches $SBR_{k,2\ell+g}$, un corrélateur CC corrélant l'une respective $\{v_{2\ell+g[q]}\}$ des $L_t/2$ suites d'échantillons reçus retardés, appliqués à la cadence $T_c$, avec le code respectif $c_{k[q]}$ à Q éléments de code (chips) et délivrant en sortie des échantillons synchrones au temps symbole $T_s = T_c/Q$, et un multiplieur CT réalisant une pondération relative au trajet respectif d'indice "2$\ell$+g" du canal de propagation en pondérant les sorties du corrélateur CC par le coefficient complexe $\alpha_{2\ell+g}^*$ du trajet "2$\ell$+g" défini par une amplitude et une phase estimées.

En variante, l'ordre des opérations est inversé : pour les branches $BR_{k,1}$ et $BR_{k,2}$ qui sont alors accolées, le signal reçu r(t) échantillonné à $T_c/S$ subit d'abord un filtrage adapté au code respectif $c_{k[q]}$ délivrant des échantillons à la cadence Tc/S, avant de subir deux recombinaisons de trajets différentes sur deux voies distinctes g=1 et g=2 chacune par des pondérations et retards relatifs aux $L_t/2$ trajets respectifs.

Le signal discret $Y_{k,g[m]}$ est produit par un sommateur $S_{k,g}$ en sortie de la branche $BR_{k,g}$ sommant les sorties au temps symbole des $L_t/2$ sous-branches $SBR_{k,g}$ à $SBR_{k,2(Lt/2-1)+g}$ associées à chacun des $L_t/2$ trajets de propagation respectifs du groupe "g", et résulte ainsi de la double somme de produits scalaires suivante pour chaque échantillon :

$$Y_{k,g[m]} \ = \ \sum_{\ell=0}^{\frac{L_t}{2}-1} \left( \sum_{q=0}^{Q-1} c_{k[q]}{}^* \cdot v_{2\ell+g}[mQ+q] \right) \cdot \alpha_{2\ell+g}{}^*$$

où (.)* désigne un complexe conjugué, et

{$c_{k[q]}$, $0 \leq q \leq Q-1$} désigne les Q éléments de code (chips) du code numéro "k" transmis à la cadence $T_c$ qui sont des éléments binaires complexes dans l'ensemble des quatre états de phase $\{1, j, -1, -j\}$ ou $\{1+j, -1+j, -1-j, 1-j\}$ de la modulation de phase QPSK.

Compte tenu de la forme du code, la corrélation avec le code représentée par la somme entre parenthèses dans la relation précédente de $Y_{k,g[m]}$ n'utilise que des additions et des soustractions.

La séparation du filtrage adapté au canal à trajets multiples en deux voies $TR_1$ et $TR_2$ comparativement à la $T_s$-structure permet de conserver assez de degrés de liberté pour annuler exactement l'interférence dans les égaliseurs $EG_1$ et $EG_2$ ayant ensemble 2KP coefficients lorsque la profondeur P est suffisante, soit $P \geq 2W_s$, où $W_s$ est la durée du canal de propagation exprimée en période de symbole.

Les K échantillons $Y_{1,g[m]}$ à $Y_{K,g[m]}$ au temps symbole restitués par la tête de réception $TR_g$, correspondant principalement au regroupement des pics de corrélation avec les amplitudes de trajet les plus élevées, sont appliqués respectivement à K filtres discrets transverses $FT_{ck_u,1,g}$ à $FT_{ck_u,K,g}$ dans l'égaliseur respectif $EG_g$ dans la voie g. Ces K filtres transverses $FT_{ck_u,1,g}$ à $FT_{ck_u,K,g}$ n'égalisent les symboles émis ayant été codés qu'avec le code de séquence respective $c_{k_u[q]}$ attribué au terminal radiotéléphonique d'usager $k_u$, avec $1 \leq k_u \leq K$. Chaque filtre transverse $FT_{ck_u,k,g}$ possède $P = P1 + 1 + P2$ coefficients $e_{ck_u,k,g,-P1}$ à $e_{ck_u,k,g,P2}$ et opère au temps symbole $T_s$. Un sommateur $S_g$ en sortie de l'égaliseur $EG_g$ et donc de la voie g additionne les résultats des K filtres $FT_{ck_u,1,g}$ à $FT_{ck_u,K,g}$ en l'échantillon suivant :

$$d_{ck_u,g[m]} \ = \ \sum_{k=1}^{k=K} \sum_{p=-P_1}^{p=+P_2} e_{ck_u,k,g,p} \ Y_{k,g[m-p]}$$

où $P = P_1 + 1 + P_2$ est le nombre de coefficients de l'égaliseur $EG_g$ et $P_1$ le retard d'estimation de celui-ci en symboles.

La profondeur de l'égaliseur $EG_g$ est ainsi de $P = P_d - W_s$ symboles, $P_d$ désignant encore la profondeur globale du dispositif de détection exprimée en symboles.

Les échantillons $d_{ck_u,1[m]}$ et $d_{ck_u,2[m]}$ produits par les sommateurs $S_1$ et $S_2$ en sortie des égaliseurs $EG_1$ et $EG_2$ sont additionnés en une variable de décision $d_{ck_u[m]}$ dans un sommateur SOM en sortie du dispositif de détection. L'égaliseur $EG_1$-$EG_2$ au temps symbole forme la variable de décision $d_{ck_u[m]}$ pour décider des symboles émis relatif au code numéro $k_u$ de séquence respective $c_{k_u[q]}$ attribué au terminal. La décision s'effectue ultérieurement symbole par symbole par comparaison aux quatre valeurs complexes mémorisées de l'ensemble précité $\{1, j, -1, -j\}$ ou $\{1+j,$

$-1+j, -1-j, 1-j\}$ dans un circuit de décision relié à la sortie du sommateur SOM, afin de déduire la valeur du symbole complexe correspondant émis à l'instant $mT_s$, avant une "démodulation de phase" fournissant les deux bits correspondants.

Ainsi selon l'invention, l'annulation exacte de l'interférence dans les égaliseurs $EG_1$ et $EG_2$ nécessite de résoudre un système de $K(2W_s+P)$ équations avec les 2KP coefficients des filtres transverses dans l'ensemble des deux égaliseurs, au lieu de KP coefficients pour la $T_s$-structure.

Le principe de la détermination des coefficients à partir de la connaissance du canal et des codes avec ici une dimension 2KP est donné ci-après.

Le vecteur de taille 2KP contenant tous les coefficients pour estimer les symboles relatif au code $c_{k_u}$ est obtenu, avec un critère d'erreur quadratique moyenne minimum MMSE, par la relation matricielle suivante:

$$(e_{ck_u})^T = (1_\Delta)^T \cdot \tau(\gamma_d)^H [\tau(\gamma_d) \cdot \tau(\gamma_d)^H + \sigma_0^2 \cdot \tau_{tn}(\beta)]^{-1}$$

où $(.)^T$ et $(.)^H$ représentent respectivement les opérateurs de transposition et de transconjugaison, et $\sigma^2_0 = N_0/2E_b$ est la variance d'un bruit gaussien additif de densité spectrale monolatérale $N_0$ et $E_b$ est l'énergie moyenne transmise par bit utile après démodulation d'un symbole complexe en deux bits. La connaissance de la variance $\sigma^2_0$ implique la connaissance du rapport bruit à signal à l'entrée du récepteur. En pratique, la variance $\sigma^2_0$ joue un rôle de régulateur et peut être fixée à une valeur comprise entre 0,1 (- 10 dB) et 0,01 (- 20 dB).

La matrice $\tau(\gamma_d)$ a une taille de 2KP lignes x $K(P+2W_s)$ colonnes et représente le transfert au temps symbole entre $P+2W_s$ symboles pour chacun de K terminaux d'usager et les 2K sorties des branches "multi-usager" de la tête de réception $TR_1$ - $TR_2$.

La matrice $\tau_{tn}(\beta)$ est une matrice de taille 2KPx2KP qui contient la corrélation temporelle sur une profondeur de P symboles dans chaque égaliseur $EG_1$, $EG_2$ et d'une branche à l'autre en sortie de la tête de réception $TR_1$ - $TR_2$.

Le vecteur transposé $(1_\Delta)^T = [0,...0,1,0,...0]$ sélectionne la $\Delta$ème ligne parmi $K(P+2W_s)$ où $\Delta=K(P_1+ 2W_s+k_u)$ est fixé à partir du choix du retard $P_1$ de l'égaliseur $EG_1$, $EG_2$.

Avec un critère de forçage à zéro annulant complètement l'interférence lorsque $P \geq 2W_s$ et sans tenir compte du bruit, on forme le pseudo-inverse à gauche de la matrice de transfert $\tau(\gamma_d)$, soit :

$$(e_{ck_u})^T = (1_\Delta)^T \; [\tau(\gamma_d)^H . \tau(\gamma_d)]^{-1} . \tau(\gamma_d)^H .$$

Pour ce critère, on n'a pas besoin de connaître le niveau de bruit et de former la matrice $\tau_{tn}(\beta)$.

Dans le cas où l'on choisit $P<2W_s$, les coefficients s'obtiennent avec la même formule pour le critère MMSE. Pour le critère de forçage à zéro : une puissance d'interférence résiduelle, non annulée, apparaît ; les coefficients sont obtenus avec la formule du critère MMSE en remplaçant $\sigma^2_0$ par zéro.

En variante, le dispositif de détection est adaptatif au niveau des phases des signaux de trajet $\alpha_2\ell_{+g}{}^*$ dans les corrélateurs CT et des coefficients $e_{ck_u,k,g,p}$ dans les filtres transverses des égaliseurs $EG_1$ et $EG_2$.

Au lieu d'être estimés directement par les relations précitées, les phases des $L_t$ signaux de trajets de canal et/ou les 2KP coefficients des filtres d'égalisation sont déterminés conjointement de manière itérative en dépendance d'une séquence d'apprentissage médiane (midambule) de 256 ou 512 éléments de code incluse dans les salves du signal reçu en mode TDD/UMTS, et/ou sont mis à jour en fonction d'un signal d'erreur entre la variable de décision $d_{ck_u[m]}$ en sortie du dispositif de détection et le symbole décidé par le circuit de décision relié à la sortie du sommateur SOM.

Lorsque les caractéristiques du canal de propagation varient peu, ce qui correspond à une quasi immobilité du terminal radiotéléphonique, les symboles dans les deux champs du symbole utile d'une salve (burst) sont mis à jour en fonction de la séquence d'apprentissage contenue dans la salve. Lorsque les caractéristiques du canal de propagation varient rapidement, ce qui correspond au terminal dans un véhicule en déplacement, les symboles utiles sont mis à jour par le signal d'erreur précité, symbole par symbole.

## Revendications

1. Dispositif de détection conjointe pour un signal reçu supportant des symboles codés chacun conjointement par K codes et échantillonnés à au plus une période d'éléments de code et ayant traversé un canal de propagation à $L_t$ trajets multiples, comprenant $L_t$ moyens de retard pour retarder des échantillons du signal reçu avec des retards estimés dûs aux trajets, K moyens de filtrage pour corréler des suites d'échantillons reçus retardés chacun à un code respectif et à des coefficients de trajets estimés, et des moyens d'égalisation pour des échantillons à la période de symbole délivrées par les moyens de filtrage, **caractérisé en ce qu'**il présente deux voies parallèles ($TR_1$ - $EG_1$, $TR_2$ - $EG_2$) groupant chacune $L_t/2$ moyens de retard respectifs ($\tau_2\ell_{+g}$), K moyens de filtrage ($BR_{k,g}$) pour corréler $L_t/2$ suites d'échantillons retardés par les $L_t/2$ moyens de retard respectifs chacun à un code respectif ($c_k$) et à $L_t/2$ coefficients de trajet estimés respectifs ($\alpha_2\ell_{+g}{}^*$) afin de sommer $L_t/2$ signaux ainsi corrélés et délivrés à la période de symbole, et K moyens d'égalisation ($FT_{ck_u,k,g}$) pour respectivement égaliser linéairement les K signaux corrélés en dépendance d'un code associé ($c_{k_u}$), et comprend un moyen ($S_1$, $S_2$, SOM) pour sommer 2K signaux égalisés à la période de symbole délivrés conjointement par les 2K moyens d'égalisation dans les deux voies.

2. Dispositif conforme à la revendication 1, dans lequel chacun ($FT_{ck_u,k,g}$) des K moyens d'égalisation comprend un filtre transversal discret ($FT_{ck_u,k,g}$) ayant des coefficients en nombre supérieur au double de la durée du canal de propagation exprimée en période de symbole.

3. Dispositif conforme à la revendication 1 ou 2, dans lequel les $L_t$ moyens de retard ($\tau_2\ell_{+1}$, $\tau_2\ell_{+2}$) imposant des retards dus aux trajets multiples sont ordonnés de manière croissante et répartis de manière chronologique dans les deux

voies (TR$_1$, TR$_2$), un trajet sur deux dans chaque voie.

4. Dispositif conforme à l'une quelconque des revendications 1 à 3, dans lequel les coefficients des moyens d'égalisation (FT$_{ck_u,k,g}$) et/ou les phases des signaux de trajet ($\alpha_{2\ell+g}$*) sont déterminés de manière itérative en dépendance d'une séquence d'apprentissage incluse dans des salves du signal reçu.

## Claims

1. Conjoint detection device for a received signal supporting symbols each conjointly coded by K codes, sampled at one chip period at most, and having passed through a propagation channel with L$_t$ multiple paths, said device comprising L$_t$ delay means for delaying samples of the received signal with estimated delays caused by the paths, K filtering means for correlating series of received samples each delayed with a respective code and with estimated path coefficients, and equalization means for samples at the symbol period delivered by the filtering means, which device is **characterized in that** it has two parallel channels (TR$_1$-EG$_1$, TR$_2$-EG$_2$) each grouping L$_t$/2 respective delay means ($\tau_{2\ell+g}$), K filtering means (BR$_{k,g}$) for correlating each of L$_t$/2 samples series delayed by the L$_t$/2 respective delay means to a respective code (c$_k$) and to a respective one of L$_t$/2 estimated path coefficients ($\alpha_{2\ell+g}$*) in order to sum L$_t$/2 signals correlated in this way and delivered at the symbol period, and K equalization means (FT$_{ck_u,k,g}$) for linearly equalizing the respective K correlated signals depending on an associated code (c$_{k_u}$), and **in that** it comprises means (S$_1$, S$_2$, SOM) for summing 2K equalized signals at the symbol period delivered conjointly by the 2K equalization means in the two channels.

2. Device according to Claim 1, in which each of the K equalization means (FT$_{ck_u,k,g}$) comprises a discrete transversal filter (FT$_{ck_u,k,g}$) having a number of coefficients greater than twice the duration of the propagation channel expressed in symbol periods.

3. Device according to Claim 1 or Claim 2, in which the L$_t$ delay means ($\tau_{2\ell+1}$, $\tau_{2\ell+2}$) imposing delays caused by the multipaths are arranged in increasing order and distributed chronologically in the two channels (TR$_1$, TR$_2$), with one path in two on each channel.

4. Device according to any one of Claims 1 to 3, in which the coefficients of the equalization means (FT$_{ck_u,k,g}$) and/or the phases of the path signals ($\alpha_{2\ell+g}$*) are determined iteratively and depending on a training sequence included in bursts of the received signal.

## Patentansprüche

1. Vorrichtung zur gemeinsamen Erfassung für ein empfangenes Signal, das Symbole trägt, die je gemeinsam mit K Codes codiert sind und mit höchstens einer Periode von Codeelementen abgetastet werden, und das einen Ausbreitungskanal mit L$_t$ Mehrfachwegen durchquert hat, mit L$_t$ Verzögerungsmitteln, um Tastproben des empfangenen Signals mit durch die Wege verursachten geschätzten Verzögerungen zu verzögern, mit K Filtermitteln, um Folgen von verzögert empfangenen Tastproben je mit einem Code und mit Koeffizienten von geschätzten Wegen zu korrelieren, und mit Egalisierungsmitteln für Tastproben in der Symbolperiode, die von den Filterungsmitteln geliefert werden, **dadurch gekennzeichnet, dass** sie zwei parallele Kanäle (TR$_1$ - EG$_1$, TR$_2$ - EG$_2$), die je L$_t$/2 Verzögerungsmittel ($\tau_2\ell+g$), K Filtermittel (BR$_{k,g}$), um L$_t$/2 Folgen von Tastproben, die von den L$_t$/2 Verzögerungsmitteln verzögert wurden, jede mit einem Code (c$_k$) und mit L$_t$/2 geschätzten Wegkoeffizienten ($\alpha_{2\ell+g}$*) zu korrelieren, um L$_t$/2 so korrelierte und in der Symbolperiode gelieferte Signale zu summieren, und K Egalisierungsmittel (FT$_{ck_u,k,g}$) aufweist, um die K korrelierten Signale in Abhängigkeit von einem zugeordneten Code (c$_{k_u}$) linear zu egalisieren, und ein Mittel (S$_1$, S$_2$, SOM) aufweist, um 2K in der Symbolperiode egalisierte Signale zu summieren, die gemeinsam von den 2K Egalisierungsmitteln in den beiden Kanälen geliefert werden.

2. Vorrichtung nach Anspruch 1, bei der jedes (FT$_{ck_u,k,g}$) der K Egalisierungsmittel ein diskretes Transversalfilter (FT$_{ck_u,k,g}$ ) aufweist, das Koeffizienten in größerer Zahl als das Doppelte der Dauer des Ausbreitungskanals ausgedrückt als Symbolperiode hat.

3. Vorrichtung nach Anspruch 1 oder 2, bei der die L$_t$ Verzögerungsmittel ($\tau_2\ell_{+1}$, $\tau_2\ell_{+2}$), die Verzögerungen aufgrund der Mehrfachwege hervorrufen, in ansteigender Ordnung angeordnet und chronologisch in den beiden Kanälen (TR$_1$, TR$_2$) verteilt sind, jeder zweite Weg in jedem Kanal.

4. Vorrichtung nach einem der Ansprüche 1 bis 3, bei der die Koeffizienten der Egalisierungsmittel ($FT_{ck_u,k,g}$) und/oder die Phasen der Wegsignale ($\alpha_2\ell_{+g}{}^*$) iterativ in Abhängigkeit von einer Lernsequenz bestimmt werden, die in den Bursts des empfangenen Signals enthalten ist.

**Fig. 1** (TECHNIQUE ANTERIEURE)

**Fig. 2** (TECHNIQUE ANTERIEURE)

Fig. 3

11